# EUROPÄISCHE PATENTSCHRIFT

(11) **EP 3 410 091 B1**
(45) Veröffentlichungstag und Bekanntmachung des Hinweises auf die Patenterteilung: **11.08.2021**
(21) Anmeldenummer: 17174143.2
(22) Anmeldetag: 02.06.2017
(51) Int. Cl.: G01M 11/02, G02B 7/00

(54) **VERFAHREN ZUM ERFASSEN EINER MODULATIONS-TRANSFERFUNKTION UND EINER ZENTRIERUNG EINES OPTISCHEN SYSTEMS**
METHOD FOR DETECTING A MODULATION TRANSFER FUNCTION AND A CENTRING SYSTEM OF AN OPTICAL SYSTEM
PROCÉDÉ DE DÉTECTION D'UNE FONCTION DE TRANSFERT DE MODULATION ET D'UN CENTRAGE D'UN SYSTÈME OPTIQUE

(43) Veröffentlichungstag der Anmeldung: 05.12.2018
(73) Patentinhaber: Trioptics GmbH, 22880 Wedel (DE)
(72) Erfinder: Erichsen, Iris, 25491 Hetlingen (DE); Bai, Alexander, 28307 Bremen (DE); Zilian, Simon, 22589 Hamburg (DE); Ruprecht, Aiko, 22605 Hamburg (DE); Dumitrescu, Eugen, 22880 Wedel (DE); Langehanenberg, Patrik, 22880 Wedel (DE)
(74) Vertreter: Seemann & Partner Patentanwälte mbB

(56) Entgegenhaltungen:
- DE-A1-102004 029 735
- US-A1- 2012 113 413
- US-A1- 2016 187 222
- Daniel Winters: "Image Quality Testing Improves as Cameras Advance", Photonics Spectra, 31. Januar 2014 (2014-01-31), XP055426325, Gefunden im Internet: URL:https://www.photonics.com/Article.aspx ?AID=55727 [gefunden am 2017-11-17]
- Herbert Gross: "Testing the Geometry of Optical Components" In: "Handbook of Optical Systems, Volume 5: Metrology of Optical Components and Systems", 30. April 2012 (2012-04-30), WILEY-VCH Verlag GmbH, XP055426348, ISBN: 978-3-527-40381-3 * Seite 769 - Seite 769; Abbildungen 53-82 *
- Sammuel Sadoulet: "OPTICS TESTING: MTF quickly characterizes the performance of imaging systems", Laser Focus World, Volume 42, Issue 3, 1. März 2006 (2006-03-01), XP055443404, Gefunden im Internet: URL:http://www.laserfocusworld.com/article s/print/volume-42/issue-3/features/optics- testing-mtf-quickly-characterizes-the-perf ormance-of-imaging-systems.html [gefunden am 2018-01-23]

## Beschreibung

Die Erfindung betrifft eine Vorrichtung zum Erfassen einer Abbildungsqualität eines optischen Systems mit zumindest einer Linse oder Linsengruppe. Ferner betrifft die Erfindung ein Verfahren zum Erfassen einer Abbildungsqualität eines optischen Systems, umfassend zumindest eine Linse oder Linsengruppe, mit einer solchen Vorrichtung.

Bei der Fertigung von qualitativ hochwertigen mehrlinsigen optischen Systemen müssen die einzelnen Linsen sehr genau zueinander ausgerichtet werden. Auch bei der Herstellung von Kameramodulen, wie sie beispielsweise in der US 2016/0334600 A1 beschrieben sind, ist es erforderlich, die optischen Elemente relativ zueinander und bezüglich des Bildsensors korrekt auszurichten und zu zentrieren.

Um bei einem optischen System eine korrekte Ausrichtung seiner Linsen durchführen zu können, ist es erforderlich, eine Position der optischen Fläche messtechnisch zu bestimmen. In diesem Zusammenhang ist die Position des Krümmungsmittelpunkts der optischen Fläche ein wichtiger Parameter. Idealerweise liegen bei mehrlinsigen Systemen die Krümmungsmittelpunkte der einzelnen optischen Flächen exakt auf einer gemeinsamen Referenzachse, die mit den Symmetrieachsen der die Linsen aufnehmenden Linsenfassungen zusammenfällt. In realen optischen Systemen kann dieser Zustand jedoch infolge von Fertigungs- und Montagetoleranzen nicht erreicht werden. Die Krümmungsmittelpunkte liegen statistisch um die Referenzachse herum verteilt. Sind die Abstände der Krümmungsmittelpunkte von der Referenzachse zu groß, so verschlechtern sich die optischen Eigenschaften des optischen Systems in unerwünschter Weise.

Aus DE 10 2014 001 151 A1 ist ein Verfahren zur Messung der Positionen von Krümmungsmittelpunkten optischer Flächen eines mehrlinsigen optischen Systems bekannt. Mit Hilfe einer optischen Winkelmesseinrichtung wird an den einem Messpunkt ein Winkel bzw. ein Versatz zwischen einer Oberflächennormalen einer optischen Fläche und einer Rotationsachse erfasst. Um diese Rotationsachse wird die Winkelmesseinrichtung anschließend gedreht und die Winkelmessung wird wiederholt.

Aus dem Artikel von Daniel Winters: "Image Quality Testing Improves as Cameras Advance", Photonics Spectra, 31.01.2014, ist eine Messanordnung bekannt, mit der ein optisches System, wie beispielsweise eine Kameraeinheit, getestet wird. Die hierzu verwendeten Kollimatoren sind so angeordnet, dass sie an verschiedenen Positionen die Eintrittspupille des zu testenden optischen Systems beleuchten. Einer der Kollimatoren ist "on-axis" angeordnet.

Aus dem Artikel von Herbert Gross: "Testing the Geometry of Optical Components"; "Handbook of Optical Systems, Volume 5: Metrology of Optical Components and Systems", 30.04.2012, WILEY-VCH Verlag GmbH, ist eine Anordnung bekannt, mit der einzelne sphärische Linsen im Hinblick auf ihre Zentrierung vermessen werden können. Es wird zur Messung der Zentrierung ein Autokollimator eingesetzt, wobei die Dezentrierung der Linse über einen seitlich angebrachten Wegstreckenmesser gemessen wird,

In dem Artikel von Sammuel Sadoulet: "OPTICS TESTING: MTF quickly characterizes the performance of imaging systems", Laser Focus World, Volume 42, Issue 3, 01.03.2006, werden MTF-Messungen für die Qualitätsüberprüfungen in der Massenfertigung beschrieben. Beispielsweise wird die Berechnung einer MTF aus der gemessenen Abbildung eines Punktes oder einer Linie oder auch aus der Abbildung einer geraden oder schräg zur Pixelausrichtung angeordneten Kante vorgeschlagen.

Aus DE 10 2004 029 735 A1 ist ein Verfahren zum Messen einer optischen Oberfläche innerhalb einer mehrlinsigen Anordnung beschrieben. Dabei wird der Prüfling mechanisch gedreht. Außerdem werden bei der Auswertung der reflektierenden Lichtstrahlen die optischen Eigenschaften der zwischen der zu prüfenden Linsenoberfläche und der Messanordnung liegenden optischen Elemente berücksichtigt.

Aus US 2012/0113413 A1 ist ein Verfahren zum Prüfen optischer Module bekannt, wie sie beispielsweise in Mobiltelefonen zum Einsatz kommen. Zu diesem Zweck wird beispielsweise eine MTF eingesetzt, die sowohl in sagittaler als auch in tangentialer Richtung ermittelt werden kann. Die Eintrittslinse wird zentriert, bevor die MTF-Messung durchgeführt wird.

Die Zentrierung eines optischen Systems ist jedoch nur ein die Qualität des optischen Systems charakterisierendes Merkmal. Vor allem für die Massenproduktion ist ein System wünschenswert, mit dem sowohl die Zentrierung von Linsen oder Linsengruppen geprüft oder erfasst werden kann als auch die Abbildungsleistung des optischen Systems in weiterer Weise charakterisiert werden kann.

Es ist eine Aufgabe der Erfindung, ein Verfahren zum Erfassen einer Abbildungsqualität eines optischen Systems anzugeben, welche/welches gegenüber dem Stand der Technik verbessert ist.

Eine beispielhafte Vorrichtung zum Erfassen einer Abbildungsqualität eines optischen Systems mit zumindest einer Linse oder Linsengruppeumfasst eine MTF-Messvorrichtung zum Messen einer Modulationstransferfunktion an mehreren Feldpunkten im Bildfeld des optischen Systems, wobei die MTF-Messvorrichtung dazu eingerichtet ist, mehrere off-axis MTF-Messungen durchzuführen, und eine Zentriermessvorrichtung zum Messen eines Zentrierzustands des optischen Systems, die on-axis angeordnet ist.

Bei der Linsengruppe handelt es sich beispielsweise um mehrere einzelne Linsen, welche gemeinsam ein optisches System bilden, z. B. ein Objektiv. Ebenso kann es sich bei der Linsengruppe um eine aus mehreren Linsen zusammengesetzte Linse wie beispielsweise einen Achromaten handeln.

Mit der Vorrichtung kann gleichzeitig mittels einer oder mehrerer, ferner beispielsweise gleichzeitig durchgeführter, MTF-Messung(en) sowohl die Abbildungsleistung als auch die Zentrierung des optischen Systems gemessen werden. Dies bietet die Möglichkeit, ausgehend von einer Grobjustage ausgehend von den Messergebnissen der Zentriermessvorrichtung eine anschließende Feinjustage zur Optimierung der Abbildungsleistung durchzuführen. Ferner ist die Kombination von MTF-Messung und Zentriermessvorrichtung für die Massenproduktion besonders geeignet, da schnell und effizient eine Vielzahl von Parametern des optischen Systems erfasst werden können.

Die MTF-Messung an mehreren Feldpunkten im Bildfeld des optischen Systems erfolgt beispielsweise durch die Auswertung eines räumlich ausgedehnten Testmusters im Rahmen der MTF-Analyse.

Gemäß einem Beispiel umfasst die Vorrichtung eine Zentriervorrichtung zum aktiven Zentrieren der zumindest einen Linse oder Linsengruppe.

Im Kontext der vorliegenden Beschreibung ist unter "off-axis" eine Anordnung der fraglichen Einheit zu verstehen, bei der diese sich im Bildfeld des optischen Systems befindet, nicht aber auf der Symmetrieachse oder Zentrierachse des optischen Systems angeordnet ist. Unter "on-axis" ist eine Anordnung zu verstehen, bei der die fragliche Einheit im Bildfeld und zumindest näherungsweise auf der Symmetrieachse oder Zentrierachse des optischen Systems angeordnet ist.

Die MTF-Messvorrichtung und die Zentriermessvorrichtung sind beispielsweise auf einem gemeinsamen Dom angeordnet.

Mithilfe der off-axis angeordneten MTF-Messvorrichtung können MTF-Messungen an verschiedenen Feldpunkten im Bildfeld des optischen Systems vorgenommen werden. Die MTF-Messvorrichtung kann problemlos off-axis angeordnet werden. Die Zentriermessvorrichtung ist jedoch beispielsweise on-axis angeordnet. Durch die Kombination von off-axis angeordneter MTF-Messvorrichtung und einer on-axis angeordneten Zentriermessvorrichtung kann eine besonders kompakte Vorrichtung angegeben werden.

Die Vorrichtung zum Erfassen einer Abbildungsqualität eines optischen Systems weist beispielhaft das Merkmal auf, dass die Zentriermessvorrichtung einen Autokollimator umfasst und dazu eingerichtet ist, einen Krümmungsmittelpunkt zumindest einer optischen Fläche des optischen Systems in Reflexion zu messen.

Anhand der Lage des Krümmungsmittelpunkts der optischen Fläche zumindest eines optischen Elements, beispielsweise einer Linse, des optischen Systems lässt sich auf den Zentrierzustands des optischen Systems schließen. Weitere Einzelheiten hierzu sind beispielsweise der DE 10 2014 001 151 A1 desselben Anmelders zu entnehmen.

Die Vorrichtung weist ferner beispielhaft eines oder mehrere der folgenden Merkmale a) bis f)auf:
a) Die Vorrichtung umfasst außerdem eine rotierbare Aufnahme, mit der das optische System um eine Zentrierachse rotierbar ist.
b) Der Autokollimator ist rotierbar ausgestaltet. Beispielsweise ist er in einer Halterung aufgenommen, so dass der Autokollimator als Ganzes um eine oder die Zentrierachse rotierbar ist.

Je nach Anwendungsfall kann es vorteilhaft sein, wahlweise das optische System rotierbar aufzunehmen oder aber den Autokollimator rotierbar auszugestalten.
c) Der Autokollimator umfasst eine Fokussieroptik, mittels der ein Fokuspunkt verschoben werden kann.

Als alternative Referenz kann statt der Rotationsachse auch eine optische Achse verwendet werden, entlang derer eine Fokussierung bewirkt wird. In diesem Fall wird auf dem Detektor kein Schlagkreis ausgewertet, sondern es werden Absolutpositionen verglichen. Die Fokussierung kann beispielsweise durch Bewegung entlang einer Linearachse realisiert sein.
d) Der Autokollimator umfasst eine Fokussieroptik, wobei diese Fokussieroptik oder Teile davon um eine oder die Zentrierachse rotierbar ist oder sind.

Im Vergleich zur Rotation des Autokollimators als Ganzes stellt die Rotation einer Fokussieroptik des Autokollimators eine Vereinfachung dar.
e) In einem Strahlengang zwischen dem Autokollimator und dem optischen System ist ein umkehrendes Reflexionsprisma, insbesondere ein Dove-Prisma, angeordnet, wobei dieses Prisma um die Zentrierachse rotierbar ist.

Alternativ oder zusätzlich zur Rotation des Autokollimators als Ganzes oder zur Rotation einer Fokussieroptik des Autokollimators kann das umkehrende Reflexionsprisma vorgesehen sein. Je nach Anwendungsfall kann die jeweils optimale Kombination der erforderlichen Maßnahmen getroffen werden.
f) Der Autokollimator ist dazu eingerichtet, gleichzeitig die Krümmungsmittelpunkte mehrerer optischer Flächen des optischen Systems zu messen.

Durch die gleichzeitige Erfassung mehrerer Krümmungsmittelpunkte von zwei oder mehr optischen Flächen einer Abbildungsoptik kann eine besonders schnelle Messung vorgenommen werden. Weitere technische Einzelheiten hierzu sind beispielsweise in der EP 3 037 800 A1 derselben Anmelderin genannt.

Die o. g. Merkmale a) bis f) können jeweils einzeln für sich genommen realisiert werden. Es ist ebenso möglich, dass die in den Merkmalen a) bis f) genannten technischen Maßnahmen miteinander kombiniert werden.

Die vorgenannten Beispiele betreffen sämtlich die Charakterisierung des optischen Systems im Hinblick auf seine Zentrierung mittels einer in Reflexion durchgeführten Messung.

Gemäß einem weiteren Beispiel, welches keine erfindungsgemäße Ausführungsform darstellt, ist die Vorrichtung ebenfalls dazu ausgebildet, eine Zentriermessvorrichtung in Transmission durchzuführen.

Beispielsweise ist die Vorrichtung dadurch fortgebildet, dass ein Bildsensor in einer Bildebene des optischen Systems angeordnet ist, wobei eine Verarbeitungseinheit umfasst ist, die dazu eingerichtet ist, den Bildsensor auszulesen, wobei die MTF-Messvorrichtung zumindest eine Strichplatte umfasst, auf der jeweils ein Testmuster vorhanden ist, wobei das optische System dieses zumindest eine Testmuster auf den Bildsensor abbildet und wobei die Verarbeitungseinheit dazu eingerichtet ist, die zugehörigen Bilddaten des Bildsensors des optischen Systems zum Bestimmen der Modulations-Transferfunktion auszuwerten.

Beispielsweise ist der Bildsensor ein Teil des optischen Systems. Bei dem optischen System handelt es sich ferner beispielsweise um ein Kameramodul.

Eine solche Vorrichtung ist für Massentests an Kameramodulen besonders geeignet. Vorteilhaft kann sowohl eine MTF-Messung zur Charakterisierung der optischen Qualität als auch eine Zentriermessung, beispielsweise gleichzeitig, erfolgen. Gegebenenfalls kann ausgehend von den Messwerten der Zentriermessung eine zusätzliche Justage/Zentrierung des optischen Systems zur Verbesserung/Optimierung von dessen Bildqualität vorgenommen werden kann.

Gemäß einer weiteren vorteilhaften Ausführungsform ist die Vorrichtung dadurch fortgebildet, dass in der Bildebene des optischen Systems eine Strichplatte angeordnet ist, auf der ein Testmuster vorhanden ist. Das optische System bildet das Testmuster ab. Die MTF-Messvorrichtung ist dazu eingerichtet, zum Messen der Modulationstransferfunktion des optischen Systems ein Abbild des Testmusters auszuwerten.

Vorteilhaft wird das Testmuster sowohl für die MTF-Messung als auch für die Zentrierungsmessung verwendet. Dies vereinfacht den Aufbau der Vorrichtung.

Die Vorrichtung zum Erfassen der Abbildungsqualität eines optischen Systems ist gemäß einem Beispiel, welches keine erfindungsgemäße Ausführungsform darstellt, dazu ausgebildet, dass die Strichplatte eine Lochblende umfasst, welche eine Punktlichtquelle in der Bildebene des optischen Systems darstellt. Zu diesem Zweck ist beispielsweise eine entsprechende Beleuchtung hinter der Strichplatte bzw. der Lochblende vorgesehen. Zu diesem Zweck hat die Strichplatte beispielsweise eine Aussparung, in die mit einer Optik fokussiert wird, um die gewünschte Punktlichtquelle zu generieren. Es ist ebenso möglich, dass die Lochblende entsprechend klein gewählt wird, sodass auch eine gleichmäßige Beleuchtung die gewünschte Punktlichtquelle in der Ebene der Strichplatte bereitstellt. Die Zentriermessvorrichtung umfasst einen Wellenfrontsensor, der zur Erfassung einer Wellenfront der Abbildung der Punktlichtquelle durch das optische System eingerichtet ist.

Der Wellenfrontsensor ist beispielsweise ein Shack-Hartmann-Sensor.

Gemäß einem Beispiel, welches keine erfindungsgemäße Ausführungsform darstellt, ist vorgesehen, dass die Zentriermessvorrichtung einen Bildsensor umfasst, das optische System das Testmuster direkt auf den Bildsensor abbildet und die Zentriermessvorrichtung dazu eingerichtet ist, den Zentrierzustand, insbesondere einen Krümmungsmittelpunkt einer optischen Fläche, des optischen Systems anhand der Position des Abbilds des Testmusters auszuwerten.

Es ist beispielsweise möglich, dass der Bildsensor mit einem langbrennweitigen Objektiv (Teleobjektiv) versehen wird, und anschließend die Zentriermessung durchgeführt wird. In diesem Fall dient die lange Brennweite des Objektivs als Hebel für die Zentriermessung, wobei das optische System nach unendlich fokussiert eingestellt sein kann.

Entsprechend diesem Beispiel ist ferner beispielsweise vorgesehen, dass eine rotierbare weitere Aufnahme umfasst ist, die dazu eingerichtet ist, das optische System um eine Zentrierachse zu rotieren.

Es ist bei Beispielen, bei denen die Strichplatte ein Testmuster für die MTF-Messung und eine Punktlichtquelle für die Zentriermessung bereitstellt, beispielsweise vorgesehen, dass mit verschiedenen Lichtquellen, welche nacheinander schaltbar ausgelegt sind, wahlweise das auf der Strichplatte vorhandene Testmuster und die in der Strichplatte vorhandenen Lochblende beleuchtet werden. Dies ermöglicht beispielsweise die Messung der Wellenfront ohne Störeinflüsse.

Gemäß einem Beispiel, welches keine erfindungsgemäße Ausführungsform darstellt, ist vorgesehen, dass der Bildsensor oder die Strichplatte entlang einer optischen Achse des optischen Systems bewegbar aufgenommen ist/sind. Indem beispielsweise der Detektor entlang der optischen Achse bewegt wird, kann der Hebel für die Zentriermessung vergrößert oder verkleinert werden. Ebenso ist es möglich, einen Fokusfleck auf dem Detektor zu erzeugen.

Gemäß einem weiteren Beispiel weist die Vorrichtung ferner das Merkmal auf, dass die Zentriermessvorrichtung dazu eingerichtet ist, in einem ersten Schritt einen ersten Zentrierzustand, anhand eines ersten Krümmungsmittelpunkts einer ersten optischen Fläche, eines ersten optischen Elements des optischen Systems zu messen, optional auf der Grundlage der Daten für diesen ersten Zentrierzustand das erste optische Element aktiv zu zentrieren, und wobei die Zentriermessvorrichtung ferner dazu eingerichtet ist, anschließend einen zweiten Zentrierzustand, anhand eines zweiten Krümmungsmittelpunkts einer zweiten optischen Fläche, eines zweiten optischen Elements des optischen Systems zu messen, und anschließend auf der Grundlage der Daten für den ersten Zentrierzustand und/oder der Daten für den zweiten Zentrierzustand das erste und zweite optische Element aktiv zueinander zu zentrieren, wobei ferner insbesondere eine mechanische Zuführung für das zweite optische Element vorhanden ist, mit der nach der Erfassung des Zentrierzustandes des ersten optischen Elements das zweite optische Element dem optischen System hinzufügbar ist.

Eine solche Vorrichtung ist besonders gut geeignet, um automatisiert eine Zentrierung eines mehrlinsigen optischen Systems vorzunehmen.

Die Aufgabe wird gelöst durch ein Verfahren zum Erfassen einer Abbildungsqualität eines optischen Systems, umfassend zumindest eine Linse oder Linsengruppe, mit einer Vorrichtung umfassend:
eine MTF-Messvorrichtung zum Messen einer Modulations-transferfunktion an mehreren Feldpunkten im Bildfeld des optischen Systems, wobei die MTF-Messvorrichtung dazu eingerichtet ist, mehrere off-axis MTF-Messungen durchzuführen, und
eine Zentriermessvorrichtung zum Messen eines Zentrierzustands des optischen Systems, die on-axis angeordnet ist, wobei die Zentriermessvorrichtung einen Autokollimator umfasst und dazu eingerichtet ist, einen Krümmungsmittelpunkt zumindest einer optischen Fläche des optischen Systems in Reflexion zu messen. Das Verfahren ist dadurch fortgebildet, dass
   - mit der Zentriermessvorrichtung ein Zentrierzustand des optischen Systems bestimmt wird,
   - auf der Grundlage der Daten für den Zentrierzustand das optische System zentriert wird und anschließend
   - mit der MTF-Messvorrichtung eine Modulationstransferfunktion des optischen Systems an mehreren Feldpunkten im Bildfeld des optischen Systems durchgeführt wird, wobei
nach einem Zentriervorgang (i) mit der MTF-Messvorrichtung eine Modulationstransferfunktion des optischen Systems bestimmt wird, (ii) anschließend eine Position eines optischen Elements geringfügig verändert wird und anschließend mit der MTF-Messvorrichtung erneut eine Modulationstransferfunktion des optischen Systems bestimmt wird, wobei die Schritte (i) und (ii) iterativ wiederholt werden, bis die Modulationstransferfunktion einen lokalen Maximalwert annimmt.

Mit einem solchen Verfahren ist es möglich, die optische Abbildungsqualität des optischen Systems auf der Grundlage der Ergebnisse der Zentriermessung zu verbessern/zu optimieren. Die anschließende Durchführung einer MTF-Messung erlaubt es, beispielsweise im Rahmen der Qualitätssicherung, die optische Abbildungsqualität des optischen Systems zu quantifizieren.

Im Übrigen treffen auf das Verfahren gleiche o. ä. Vorteile zu wie sie bereits im Hinblick auf die Vorrichtung zum Erfassen einer Abbildungsqualität eines optischen Systems erwähnt wurden, sodass auf Wiederholungen verzichtet werden soll.

Gemäß einer vorteilhaften Ausführungsform ist das Verfahren dadurch fortgebildet, dass in einem ersten Schritt mit der Zentriermessvorrichtung ein erster Zentrierzustand, anhand eines ersten Krümmungsmittelpunkts einer ersten optischen Fläche, eines ersten optischen Elements des optischen Systems gemessen wird, optional auf der Grundlage der Daten für diesen ersten Zentrierzustand das erste optische Element zentriert wird und anschließend mit der Zentriermessvorrichtung ein zweiter Zentrierzustand, anhand eines zweiten Krümmungsmittelpunkts einer zweiten optischen Fläche, eines zweiten optischen Elements des optischen Systems gemessen wird, und anschließend auf der Grundlage der Daten für den ersten Zentrierzustand und/oder der Daten für den zweiten Zentrierzustand das erste und zweite optische Element relativ zueinander zentriert werden.

Optional ist vorgesehen, dass das zweite optische Element nach der Erfassung des Zentrierzustandes des ersten optischen Elements dem optischen System hinzugefügt wird.

Die Zentrierung erfolgt also nicht zwingend relativ zu der Zentrierachse des Messsystems, sondern so, dass die Linsen relativ zueinander zentriert sind.

Die Erfassung eines Zentrierzustandes erfolgt beispielsweise durch die Ermittlung eines Krümmungsmittelpunkts zumindest einer der optischen Flächen zumindest eines optischen Elements des optischen Systems. Die Abweichung des Krümmungsmittelpunkts von einer Zentrierachse quantifiziert in diesem Zusammenhang die Qualität der Zentrierung.

Mithilfe dieses Verfahrens ist es beispielsweise möglich, ein optisches System sehr hoher Qualität herzustellen, da dieses während des Herstellungsprozesses im Hinblick auf seine Zentrierung überprüft und optimiert wird.

Gemäß einer vorteilhaften Weiterbildung des Verfahrens ist vorgesehen, dass auf der Grundlage der Daten der mit der MTF-Messvorrichtung an mehreren Feldpunkten des optischen Systems ermittelten Modulationstransferfunktion eine Verkippung einer Bildebene des optischen Systems bestimmt wird, wobei auf der Grundlage der Daten für die Verkippung der Bildebene des optischen Systems das optische System ausgerichtet wird, so dass die Bildebene zumindest näherungsweise senkrecht zu einer Zentrierachse orientiert ist und wobei anschließend mit der Zentriermessvorrichtung erneut zumindest ein Krümmungsmittelpunkt zumindest einer optischen Fläche des optischen Systems gemessen und auf der Grundlage dieser Daten das optische System zentriert wird.

Mit anderen Worten wird also in einem iterativen Verfahren die MTF-Messung genutzt, um eine Verkippung der Bildebene zu bestimmen. Das optische System wird verkippt, um eine gerade Bildebene zu erhalten, anschließend wird der Zentriervorgang wiederholt.

Erfindungsgemäß ist vorgesehen, dass (i) mit der MTF-Messvorrichtung eine Modulationstransferfunktion des optischen Systems bestimmt wird, (ii) anschließend eine Position eines optischen Elements insbesondere stochastisch geringfügig verändert wird und anschließend mit der MTF-Messvorrichtung erneut eine Modulationstransferfunktion des optischen Systems bestimmt wird, wobei die Schritte (i) und (ii) iterativ wiederholt werden, bis die Modulationstransferfunktion einen lokalen Maximalwert annimmt.

Mit anderen Worten werden die Linsenpositionen eines optischen Systems leicht variiert, um eine Position zu finden, in der die besten MTF-Ergebnisse erhalten werden.

Weitere Merkmale der Erfindung werden aus der Beschreibung erfindungsgemäßer Ausführungsformen zusammen mit den Ansprüchen und den beigefügten Zeichnungen ersichtlich.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- FIG. 1: eine Vorrichtung zum Erfassen einer Abbildungsqualität eines optischen Systems in einer schematisch vereinfachten Seitenansicht,
- FIG. 2: eine weitere Vorrichtung zum Erfassen einer Abbildungsqualität eines optischen Systems, welches einen Bildsensor umfasst, und
- FIG. 3a) und 3b): Darstellungen einzelner beispielhafter Verfahrensschritte eines Verfahrens zum Erfassen einer Abbildungsqualität eines optischen Systems, umfassend eine Linsengruppe, wobei eine Zentrierung der Linsen der Linsengruppe vorgenommen wird.

In den Zeichnungen sind jeweils gleiche oder gleichartige Elemente und/oder Teile mit denselben Bezugsziffern versehen, so dass von einer erneuten Vorstellung jeweils abgesehen wird.

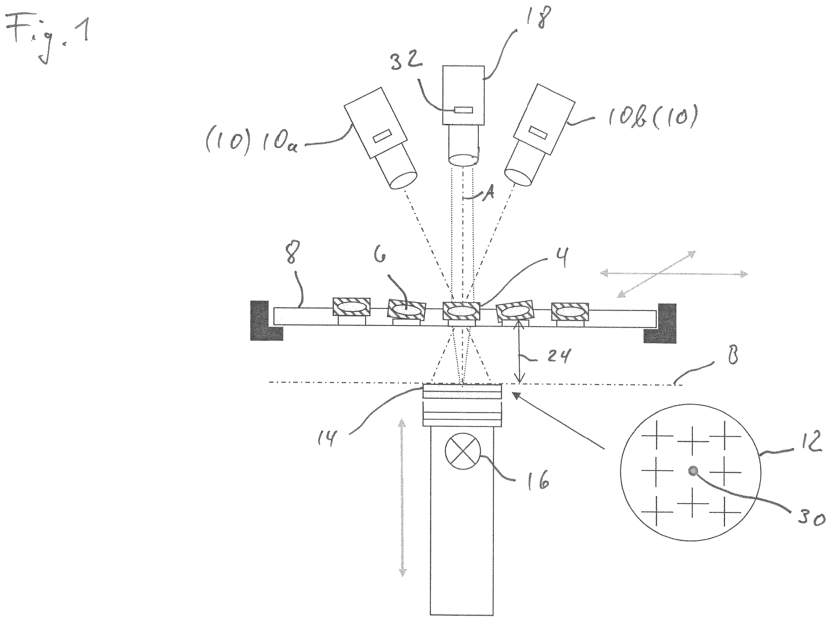

FIG. 1 zeigt in einer schematisch vereinfachten Seitenansicht eine Vorrichtung 2 zum Erfassen einer Abbildungsqualität eines optischen Systems 4. Beispielhaft ist die Vorrichtung 2 dazu eingerichtet, eine Vielzahl optischer Systeme 4 hinsichtlich ihrer Abbildungsqualität zu testen und/oder zu optimieren, von denen aus Gründen der Übersichtlichkeit lediglich einige mit Bezugszeichen versehen sind. Die optischen Systeme 4 umfassen weiterhin beispielhaft lediglich ein einzelnes optisches Element, nämlich eine Linse 6. Die in FIG. 1 gezeigte Vorrichtung 2 ist lediglich beispielsweise für einen Massentest optischer Systeme 4 vorgesehen. Zu diesem Zweck sind die optischen Systeme 4, beispielsweise Kameraobjektive, auf einem Träger 8 aufgenommen, welcher, wie mit Pfeilen angedeutet, in einer Ebene verfahrbar ist. So können die einzelnen optischen Systeme 4 in schneller Reihenfolge nacheinander geprüft werden.

Die Vorrichtung 2 umfasst eine MTF-Messvorrichtung 10, die beispielhaft die beiden off-axis angeordneten Messvorrichtungen 10a und 10b umfasst. Die MTF-Messvorrichtung 10 ist zum Erfassen einer Modulations-Transferfunktion an mehreren Feldpunkten im Bildfeld des optischen Systems 4 eingerichtet. Bereits durch die off-axis Anordnung der einzelnen MTF-Messvorrichtungen 10a, 10b wird die Messung der Modulationstransferfunktion an unterschiedlichen Feldpunkten im Bildfeld des optischen Systems 4 möglich. Außerdem wird als Testmuster 12 ein ausgedehntes Testmuster eingesetzt, beispielsweise die dargestellte Anordnung von Kreuzen. Auch dies führt dazu, dass die Modulationstransferfunktion an mehreren unterschiedlichen Feldpunkten im Bildfeld des optischen Systems 4 erfasst wird. Das Testmuster 12 befindet sich auf einer Strichplatte 14, es ist beispielsweise in diese eingeätzt. Die Strichplatte 14 ist mittels einer Lichtquelle 16, beispielsweise einer Lampe, beleuchtbar. Die Strichplatte 14 ist in einer Bildebene B des optischen Systems 4 angeordnet. Bei der mit Bezugszeichen 24 bezeichneten Entfernung handelt es sich also um die Schnittweite des optischen Systems 4. Die MTF-Messvorrichtung 10 ist dazu eingerichtet, mehrere off-axis MTF-Messungen durchzuführen.

Die Vorrichtung 2 umfasst außerdem eine Zentriermessvorrichtung 18, welche beispielhaft on-axis angeordnet ist. Dies bedeutet, dass die Zentriermessvorrichtung 18 zumindest näherungsweise auf einer Achse A angeordnet ist, welche der gewünschten Zentrierachse des optischen Systems 4 entspricht. Beispielhaft und aus Gründen der besseren Darstellbarkeit stark übertrieben sind unterschiedliche Zentrierzustände der einzelnen optischen Systeme 4 dargestellt. Offensichtlich entsprechen deren optische Achsen noch nicht der gewünschten Zentrierachse A. Die Zentriermessvorrichtung 18 dient zum Messen eines Zentrierzustands des optischen Systems 4.

Mithilfe der Vorrichtung 2 kann vorteilhaft sowohl eine Modulations-transferfunktion zur Charakterisierung der Abbildungsqualität des optischen Systems 4 aufgenommen als auch der Zentrierzustand des optischen Systems 4 festgestellt werden. Die Abbildungsqualität des optischen Systems 4 lässt sich also durch zwei Messverfahren und Messgrößen charakterisieren, welche vorteilhaft beispielsweise gleichzeitig oder in schneller Abfolge erfasst werden. Aus diesem Grund ist die Vorrichtung 2, wie in FIG. 1 angedeutet, für Massentests von optischen Systemen 4 besonders geeignet.

Optische Systeme 4, welche häufig derartigen Massentests unterzogen werden, sind beispielsweise Kameramodule, entsprechend handelt es sich bei dem optischen System 4 beispielsweise um Kameramodule.

Die beiden MTF-Messvorrichtungen 10a, 10b und die Zentriermessvorrichtung 18 sind beispielsweise auf einem in FIG. 1 nicht dargestellten gemeinsamen Dom angeordnet. Durch diese Anordnung kann eine besonders kompakte Vorrichtung 2 angegeben werden.

FIG. 1 zeigt eine Vorrichtung 2 zum Erfassen einer Abbildungsqualität eines optischen Systems 4, bei der in der Bildebene B des optischen Systems 4 eine Strichplatte 14 angeordnet ist. Auf dieser Strichplatte 14 ist ein Testmuster 12 vorhanden. Das Testmuster 12 besteht aus den beispielhaft dargestellten Kreuzen. Ferner umfasst die Strichplatte 14 eine Lochblende 30. Die Strichplatte 14 wird von der Lichtquelle 16 beleuchtet, so bildet die Lochblende 30 eine Punktlichtquelle in der Bildebene B. Das optische System 4 bildet die Punktlichtquelle beispielsweise nach unendlich ab, wobei die dabei entstehende Wellenfront von einem Wellenfrontsensor 32, beispielsweise einem Shack-Hartmann-Sensor, erfasst wird. Der Wellenfrontsensor dient der Erfassung einer Wellenfront der Abbildung der Punktlichtquelle durch das optische System 4, welche von der Lochblende 30 in der Bildebene B gebildet wird.

Alternativ ist insbesondere vorgesehen, dass die Zentriermessvorrichtung 18 einen Bildsensor (nicht dargestellt) umfasst, und das optische System 4 das Testmuster 12 direkt auf diesen Bildsensor abbildet. In diesem Zusammenhang ist ferner beispielsweise vorgesehen, dass die Vorrichtung 2 eine weitere rotierbare Aufnahme umfasst, die dazu eingerichtet ist, das optische System 4 um die Zentrierachse A zu rotieren.

Ferner ist gemäß einem weiteren Ausführungsbeispiel vorgesehen, dass der Bildsensor und/oder die Strichplatte 14 entlang der optischen Achse A des optischen Systems 4 bewegbar aufgenommen sind. Zu diesem Zweck sind geeignete verfahrbare Halterungen vorgesehen.

Die in FIG. 1 gezeigte Vorrichtung 2 zum Erfassen der Abbildungsqualität des optischen Systems 4 arbeitet in Durchlicht. Es ist ebenso vorgesehen, dass die Zentriermessvorrichtung 18 dazu eingerichtet ist, in Reflexion zu arbeiten. Zur Charakterisierung des Zentrierzustands des optischen Systems 4 wird beispielsweise ein Krümmungsmittelpunkt einer optischen Fläche des optischen Systems 4 gemessen. Beispielsweise wird der Krümmungsmittelpunkt der der Zentriermessvorrichtung 18 zugewandten Seite der Linse 6 bestimmt. Eine Abweichung dieses Krümmungsmittelpunkts von der Zentrierachse A gibt einen Wert für den Zentrierzustands des optischen Systems 4 an.

Bei einer solchen Vorrichtung 2 ist beispielsweise vorgesehen, dass die gesamte Zentriermessvorrichtung 18 um die Zentrierachse A rotierbar ist. Hierzu ist die Zentriermessvorrichtung 18 in einer rotierbaren Aufnahme aufgenommen. Es ist ebenso vorgesehen, dass eine solche Zentriermessvorrichtung 18 einen Autokollimator 20 umfasst, wobei dieser Autokollimator 20 rotierbar ausgestaltet ist. Der Autokollimator 20 ist beispielsweise als Ganzes um die Zentrierachse A rotierbar. Ferner kann vorgesehen sein, dass der Autokollimator 20 eine Fokussieroptik 22 umfasst, und diese Fokussieroptik 22 oder Teile davon um die gewünschte Zentrierachse A rotierbar ist/sind.

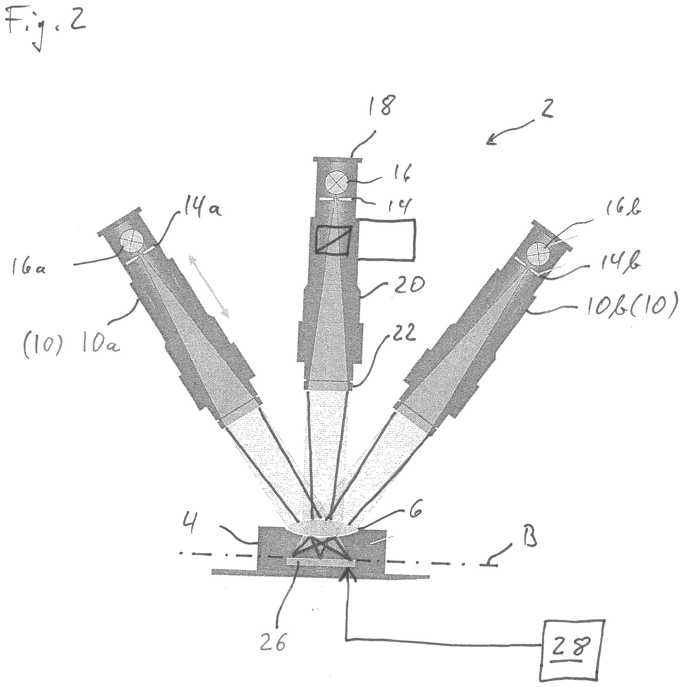

FIG. 2 zeigt eine solche weitere Vorrichtung 2 zum Erfassen einer Abbildungsqualität eines optischen Systems 4, welches beispielhaft eine Linse 6 umfasst. Das optische System 4 umfasst einen Bildsensor 26, beispielsweise ist das optische System 4 ein Kameramodul. Der Bildsensor 26 ist in einer Bildebene B des optischen Systems 4 angeordnet. Die Vorrichtung 2 umfasst ferner eine Verarbeitungseinheit 28, beispielsweise einen PC oder dergleichen, die dazu eingerichtet ist, den Bildsensor 26 auszulesen. Die MTF-Messvorrichtung 10, welche beispielhaft aus den beiden MTF-Messvorrichtungen 10a und 10b besteht, umfasst zumindest eine Strichplatte 14. Die MTF-Messvorrichtung 10a umfasst eine Strichplatte 14a, die MTF-Messvorrichtung 10b umfasst eine weitere Strichplatte 14b, auf denen jeweils ein Testmuster 12 vorhanden ist. Die auf den Strichplatten 14a, 14b vorhandenen Testmuster 12 werden jeweils mit einer geeigneten Lichtquelle 16a, 16b beleuchtet und von der Linse 6 auf den Bildsensor 26 des optischen Systems 4 abgebildet. Die Verarbeitungseinheit 26 ist dazu eingerichtet, aus den mithilfe des Bildsensors 26 erfassten Bilddaten der Bilder der Strichplatten 14a, 14b eine Modulationstransferfunktion der Linse 6 in verschiedenen Feldpunkten im Bildfeld der Linse 6 zu berechnen.

Ferner ist beispielsweise vorgesehen, dass in einem Strahlengang, der in FIG. 2 angedeutet ist, zwischen einem Autokollimator 20 und dem optischen System 4 ein umkehrendes Reflexionsprisma, beispielsweise ein Dove-Prisma, angeordnet ist. Dieses Prisma ist beispielsweise um die Zentrierachse A rotierbar. Es ist ferner beispielsweise vorgesehen, dass der Autokollimator 20 dazu eingerichtet ist, gleichzeitig mehrere Krümmungsmittelpunkte mehrerer optischer Flächen eines optischen Systems 4 zu bestimmen. Dies ist für optische Systeme 4 interessant, welche aus mehreren optischen Elementen, beispielsweise aus mehreren Linsen 6, aufgebaut sind. Bei einer solchen Vorrichtung 2 werden beispielsweise mehrere Autokollimatoren nebeneinander angeordnet, wobei ihre Strahlengänge über entsprechende Strahlteiler miteinander gekoppelt werden.

Die Vorrichtung 2 gemäß einem oder mehreren der zuvor genannten Ausführungsbeispiele wird außerdem in einem Verfahren zum Erfassen einer Abbildungsqualität eines optischen Systems 4 eingesetzt. Bei einem solchen Verfahren wird mithilfe der Zentriermessvorrichtung 18 ein Zentrierzustand des optischen Systems 4 bestimmt. Auf der Grundlage der Daten für den Zentrierzustand des optischen Systems 4 wird anschließend das optische System 4 zentriert. Beispielsweise werden Daten für die Lage eines Krümmungsmittelpunkts zumindest einer optischen Fläche zumindest eines optischen Elements, beispielsweise der Linse 6, des optischen Systems 4, bestimmt. Anhand der Abweichung des Krümmungsmittelpunkts von der Zentrierachse A kann auf den Zentrierzustands des optischen Systems 4 geschlossen werden. Anschließend wird mithilfe der MTF-Messvorrichtung 10 eine Modulationstransferfunktion des optischen Systems 4 an mehreren Feldpunkten im Bildfeld des optischen Systems 4 durchgeführt.

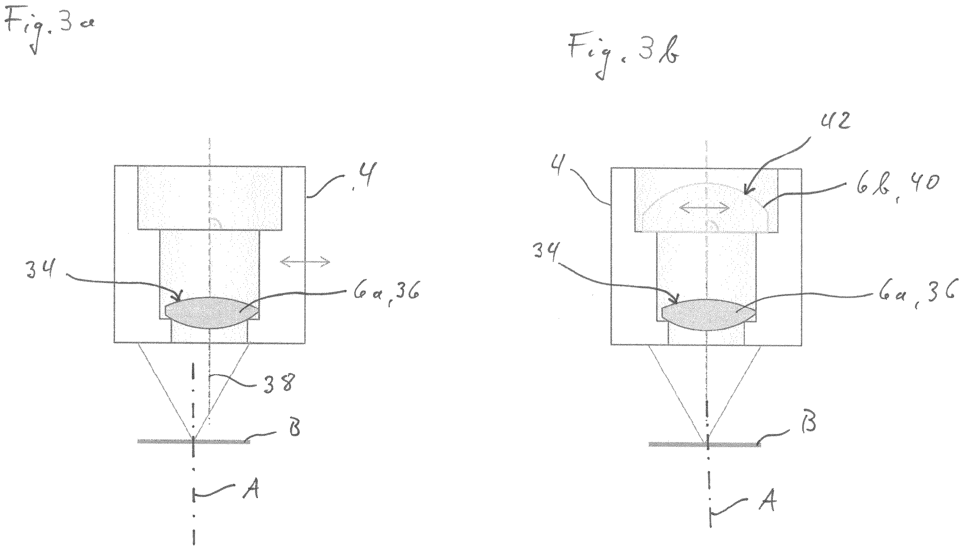

Die FIG. 3a) und 3b) zeigen beispielhaft zwei einzelne Verfahrensschritte eines solchen Verfahrens. Das optische System 4 umfasst beispielhaft ein erstes optisches Element 36 und ein zweites optisches Element 40. Bei den optischen Elementen 36, 40 handelt es sich beispielsweise um eine erste Linse 6a und eine zweite Linse 6b. Das erste optische Element 36 umfasst eine erste optische Fläche 34, das zweite optische Element 40 umfasst eine zweite optische Fläche 42. Es wird anhand der gezeigten Figuren beispielhaft die Zentrierung der beiden Linsen 6a, 6b zueinander erläutert.

In einem ersten Schritt wird mithilfe der Zentriermessvorrichtung 18 ein erster Zentrierzustand des ersten optischen Elements 36 erfasst. Dieser wird beispielsweise durch die Lage eines ersten Krümmungsmittelpunkts der ersten optischen Fläche 34 charakterisiert. Aus der Lage dieses Krümmungsmittelpunkts kann beispielsweise auf die Lage einer optischen Achse 38 des ersten optischen Elements 36 geschlossen werden. Auf der Grundlage dieser Daten, beispielsweise einer Abweichung der optischen Achse 38 von der Zentrierachse A, wird anschließend eine Zentrierung des ersten optischen Elements 36, wie in Figur 3a mit Doppelpfeil angedeutet, vorgenommen. Es erfolgt also eine Zentrierung bezüglich der Zentrierachse A.

Anschließend wird mit der Zentriermessvorrichtung 18 ein zweiter Zentrierzustand des zweiten optischen Elements 40 ermittelt. Erneut kann beispielsweise anhand der Lage eines Krümmungsmittelpunkts der zweiten optischen Fläche 42 auf den Zentrierzustand des zweiten optischen Elements 40 geschlossen werden. Anhand einer Abweichung dieses zweiten Krümmungsmittelpunkts von der Zentrierachse A können anschließend das erste und das zweite optische Element 36, 40, wie in FIG. 3b mit Doppelpfeil angedeutet, zueinander zentriert werden.

Gemäß einem weiteren Ausführungsbeispiel wird auf der Grundlage der Daten der mit der MTF-Messvorrichtung 10 an mehreren Feldpunkten des optischen Systems 4 ermittelten Modulationstransferfunktion auf eine Verkippung einer Bildebene B des optischen Systems 4 geschlossen. Auf der Grundlage der Daten für die Verkippung der Bildebene B des optischen Systems 4 werden die optischen Elemente des optischen Systems 4, beispielsweise seine Linsen 6a, 6b ausgerichtet, sodass die Bildebene B zumindest näherungsweise senkrecht zu einer Zentrierachse A orientiert ist. Anschließend ist beispielsweise vorgesehen, dass mit der Zentriermessvorrichtung 18 erneut zumindest ein Zentrierzustand zumindest eines optischen Elements gemessen und auf der Grundlage dieser Daten das optische System 4 zentriert wird.

Gemäß einem weiteren Ausführungsbeispiel ist vorgesehen, dass nach dem Zentriervorgang in einem ersten Schritt mit der MTF-Messvorrichtung 10 eine Modulationstransferfunktion des optischen Systems 4 bestimmt wird. Anschließend wird in einem zweiten Schritt eine Position eines optischen Elements, beispielsweise eine Position der Linsen 6a, 6b, insbesondere stochastisch, geringfügig verändert. Erneut wird anschließend mit der MTF-Messvorrichtung 10 eine Modulationstransferfunktion des optischen Systems 4 bestimmt. Der erste Schritt und der zweite Schritt werden iterativ wiederholt, bis die Modulationstransferfunktion einen lokalen Maximalwert annimmt, die optische Abbildungsleistung des optischen Systems 4 also optimiert ist.

Im Rahmen der Erfindung sind Merkmale, die mit "insbesondere" oder "vorzugsweise" gekennzeichnet sind, als fakultative Merkmale zu verstehen.

### Bezugszeichenliste

- 2: Vorrichtung
- 4: optisches System
- 6: Linse
- 8: Träger
- 10, 10a, 10b: MTF-Messvorrichtung
- 12: Testmuster
- 14, 14a, 14b: Strichplatte
- 16, 16a, 16b: Lichtquelle
- 18: Zentriermessvorrichtung
- 20: Autokollimator
- 22: Fokussieroptik
- 24: Bildweite
- 26: Bildsensor
- 28: Verarbeitungseinheit
- 30: Lochblende
- 32: Wellenfrontsensor
- 34: erste optische Fläche
- 36: erstes optisches Element
- 38: erste optische Achse
- 40: zweites optisches Element
- 42: zweite optische Fläche

- A: Zentrierachse
- B: Bildebene

## Patentansprüche

1. Verfahren zum Erfassen einer Abbildungsqualität eines optischen Systems (4), umfassend zumindest eine Linse (6) oder Linsengruppe, mit einer Vorrichtung (2) umfassend:
eine MTF-Messvorrichtung (10) zum Messen einer Modulations-transferfunktion an mehreren Feldpunkten im Bildfeld des optischen Systems (4), wobei die MTF-Messvorrichtung (10a, 10b) dazu eingerichtet ist, mehrere off-axis MTF-Messungen durchzuführen, und
eine Zentriermessvorrichtung (18) zum Messen eines Zentrierzustands des optischen Systems (4), die on-axis angeordnet ist, wobei die Zentriermessvorrichtung (18) einen Autokollimator (20) umfasst und dazu eingerichtet ist, einen Krümmungsmittelpunkt zumindest einer optischen Fläche des optischen Systems (4) in Reflexion zu messen, wobei
mit der Zentriermessvorrichtung (18) ein Zentrierzustand des optischen Systems (4) bestimmt wird,
auf der Grundlage der Daten für den Zentrierzustand das optische System (4) zentriert wird und anschließend mit der MTF-Messvorrichtung (10) eine Modulationstransferfunktion des optischen Systems (4) an mehreren Feldpunkten im Bildfeld des optischen Systems (4) durchgeführt wird, wobei nach einem Zentriervorgang (i) mit der MTF-Messvorrichtung (10) eine Modulationstransferfunktion des optischen Systems (4) bestimmt wird, (ii) anschließend eine Position eines optischen Elements geringfügig verändert wird und anschließend mit der MTF-Messvorrichtung (10) erneut eine Modulationstransferfunktion des optischen Systems (4) bestimmt wird, wobei die Schritte (i) und (ii) iterativ wiederholt werden, bis die Modulationstransferfunktion einen lokalen Maximalwert annimmt.

2. Verfahren nach Anspruch 1, **dadurch gekennzeichnet, dass** in einem ersten Schritt mit der Zentriermessvorrichtung (18) ein erster Zentrierzustand anhand eines ersten Krümmungsmittelpunkts einer ersten optischen Fläche (34) eines ersten optischen Elements (36) des optischen Systems (4) gemessen wird, optional auf der Grundlage der Daten für diesen ersten Zentrierzustand das erste optische Element (36) zentriert wird und anschließend mit der Zentriermessvorrichtung (18) ein zweiter Zentrierzustand anhand eines zweiten Krümmungsmittelpunkts einer zweiten optischen Fläche (42) eines zweiten optischen Elements (40) des optischen Systems (4) gemessen wird, und anschließend auf der Grundlage der Daten für den ersten Zentrierzustand und/oder der Daten für den zweiten Zentrierzustand das erste und zweite optische Element (36, 40) relativ zueinander zentriert werden, wobei ferner insbesondere das zweite optische Element (40) nach der Erfassung des Zentrierzustandes des ersten optischen Elements (36) dem optischen System (4) hinzugefügt wird.

3. Verfahren nach Anspruch 1 oder 2, **dadurch gekennzeichnet, dass** auf der Grundlage der Daten der mit der MTF-Messvorrichtung (10) an mehreren Feldpunkten des optischen Systems (4) ermittelten Modulationstransferfunktion eine Verkippung einer Bildebene (B) des optischen Systems (4) bestimmt wird, wobei auf der Grundlage der Daten für die Verkippung der Bildebene (B) des optischen Systems (4) das optische System (4) ausgerichtet wird, so dass die Bildebene (B) zumindest näherungsweise senkrecht zu einer Zentrierachse (A) orientiert ist, und wobei anschließend mit der Zentriermessvorrichtung (18) erneut zumindest ein Zentrierzustand, insbesondere anhand eines Krümmungsmittelpunkts zumindest einer optischen Fläche (34, 42) des optischen Systems (4) gemessen und auf der Grundlage dieser Daten das optische System (4) zentriert wird.

## Claims

1. A method for detecting an imaging quality of an optical system (4), comprising at least one lens (6) or a lens group, with an apparatus (2) comprising:
an MTF measuring apparatus (10) for measuring a modulation transfer function at a plurality of field points in the imaging field of the optical system (4), wherein the MTF measuring apparatus (10a, 10b) is configured to perform a plurality of off-axis MTF measurements, and
- a centering measuring apparatus (18) for measuring a centered state of the optical system (4) that is arranged on-axis, wherein the centering measuring apparatus (18) comprises an autocollimator (20) and is configured to measure a center of curvature of at least one optical surface of the optical system (4) in reflection,
wherein
- a centered state of the optical system (4) is determined with the centering measuring apparatus (18),
- the optical system (4) is centered based on the data on the centered state, and then
- a modulation transfer function of the optical system (4) is performed by the MTF measuring apparatus (10) at a plurality of field points in the field of view of the optical system (4), wherein
after a centering process, (i) a modulation transfer function of the optical system (4) is determined with the MTF measuring apparatus (10), (ii) then a position of an optical element is changed slightly and then a modulation transfer function of the optical system (4) is again determined with the MTF measuring apparatus (10), wherein steps (i) and (ii) are repeated iteratively until the modulation transfer function reaches a local maximum value.

2. The method according to claim 1, **characterized in that** in a first step, a first centered state is measured with the measuring apparatus (18), namely a first center of curvature of a first optical surface (34), of a first optical element (36) of the optical system (4), optionally the first optical element (36) is centered based on the data on this first centered state, and then a second centered state is measured with the centering measuring apparatus (18), namely a second center of curvature of a second optical surface (42), of a second optical element (40) of the optical system (4), and then based on the data on the first centered state and/or the data on the second centered state, the first and second optical element (36, 40) are centered relative to each other, wherein furthermore in particular the second optical element (40) is added to the optical system (4) after the detection of the centered state of the first optical element (36).

3. The method according to claim 1 or 2, **characterized in that** a tilt of an image plane (B) of the optical system (4) is determined based on the data of the modulation transfer function ascertained with the MTF measuring apparatus (10) at a plurality of field points of the optical system (4), wherein the optical system (4) is aligned based on the data on the tilt of the image plane (B) of the optical system (4) such that the image plane (B) is oriented at least approximately perpendicular to a centering axis (A), and wherein at least one centered state, in particular considering a center of curvature of at least one optical surface (34, 42) of the optical system (4) is then measured again with the centering measuring apparatus (18), and the optical system (4) is centered based on this data.

## Revendications

1. Procédé pour détecter une qualité d'imagerie d'un système optique (4) comprenant au moins une lentille (6) ou un groupe de lentilles, avec un dispositif (2) comprenant :
un dispositif de mesure MTF (10) pour mesurer une fonction de transfert de modulation en une pluralité de points de champ dans le champ d'image du système optique (4), le dispositif de mesure MTF (10a, 10b) étant agencé pour effectuer une pluralité de mesures MTF hors axe ; et
un dispositif (18) de mesure de centrage pour mesurer un état de centrage du système optique (4), étant disposé sur l'axe, le dispositif (18) de mesure de centrage comprenant un auto-collimateur (20) et étant adapté pour mesurer un centre de courbure d'au moins une surface optique du système optique (4) en réflexion,
un état de centrage du système optique (4) étant déterminé au moyen du dispositif (18) de mesure de centrage,
le système optique (4) est centré sur la base des données d'état de centrage, et ensuite une fonction de transfert de modulation du système optique (4) est exécutée à une pluralité de points de champ dans le champ d'image du système optique (4) au moyen du dispositif de mesure MTF (10) ; après une opération de centrage, (i) une fonction de transfert de modulation du système optique (4) est déterminée au moyen du dispositif de mesure MTF (10), et (ii) ensuite, une position d'un élément optique est légèrement modifiée, et ensuite, une fonction de transfert de modulation du système optique (4) est à nouveau déterminée au moyen du dispositif de mesure MTF (10), les étapes (i) et (ii) étant répétées de manière itérative jusqu'à ce que la fonction de transfert de modulation prenne une valeur maximale locale.

2. Procédé selon la revendication 1, **caractérisé en ce que**, dans une première étape, un premier état de centrage est mesuré au moyen du dispositif (18) de mesure de centrage sur la base d'un premier centre de courbure d'une première surface optique (34) d'un premier élément optique (36) du système optique (4), éventuellement, sur la base des données de ce premier état de centrage, le premier élément optique (36) est centré, puis un deuxième état de centrage est mesuré au moyen du dispositif (18) de mesure de centrage sur la base d'un deuxième centre de courbure d'une deuxième surface optique (42) d'un deuxième élément optique (40) du système optique (4), et ensuite, sur la base des premières données d'état de centrage et/ou des deuxièmes données d'état de centrage, les premier et deuxième éléments optiques (36, 40) sont centrés l'un par rapport à l'autre, le deuxième élément optique (40) étant en outre, notamment, ajouté au système optique (4) après que l'état de centrage du premier élément optique (36) ait été détecté.

3. Procédé selon la revendication 1 ou la revendication 2, **caractérisé en ce qu'**une inclinaison d'un plan image (B) du système optique (4) est déterminée sur la base des données de la fonction de transfert de modulation détectée au moyen du dispositif de mesure MTF (10) au niveau d'une pluralité de points de champ du système optique (4) ; sur la base des données pour l'inclinaison du plan image (B) du système optique (4), le système optique (4) est aligné, de sorte que le plan d'image (B) est orienté au moins approximativement perpendiculairement à un axe de centrage (A), et ensuite au moins un état de centrage est mesuré à nouveau au moyen du dispositif (18) de mesure de centrage, en particulier sur la base d'un centre de courbure d'au moins une surface optique (34, 42) du système optique (4), et le système optique (4) est centré sur la base de ces données.
